# FASCICULE DE BREVET EUROPEEN

(11) **EP 1 669 648 B1**
(45) Date de publication et mention de la délivrance du brevet: **25.02.2009**
(21) Numéro de dépôt: 05292518.7
(22) Date de dépôt: 28.11.2005
(51) Int. Cl.: F16K 31/04

(54) **Vanne motorisée**
Motorgesteuertes Ventil
Motor operated valve

(30) Priorité: 08.12.2004 FR 0413062
(43) Date de publication de la demande: 14.06.2006
(73) Titulaire: Asco Joucomatic, 92500 Rueil Malmaison (FR)
(72) Inventeur: Balat, Jean-Marc, 28600 Luisant (FR); Gousseau, Bernard, 28630 Thivars (FR); Gomez, Jean-Pierre, 28300 Amilly (FR)
(74) Mandataire: Michardière, Bernard

(56) Documents cités:
- EP-A- 0 957 298
- EP-A- 1 190 656
- DE-B- 1 157 729
- PATENT ABSTRACTS OF JAPAN vol. 010, no. 012 (P-421), 17 janvier 1986 (1986-01-17) & JP 60 168218 A (UBE KOSAN KK), 31 août 1985 (1985-08-31)

## Description

La présente invention concerne une vanne motorisée comportant un corps avec au moins une entrée et une sortie, un organe d'obturation monté mobile dans le corps pour obturer ou libérer un passage entre l'entrée et la sortie, et un actionneur pour commander le déplacement de l'organe d'obturation formé par un clapet propre à venir s'appliquer sur un siège, ledit clapet étant solidaire d'une tige mobile en translation entraînée par un moteur électrique, EP 1190656 A1 décrit une telle vanne.

La commande du déplacement de l'organe d'obturation doit répondre à des exigences difficiles à satisfaire. Au début de l'ouverture, l'effort à exercer pour déplacer l'organe d'obturation doit être relativement important, notamment lorsqu'il faut vaincre une différence de pression s'opposant à l'ouverture. Ensuite, l'effort à exercer est plus faible. Dans le sens inverse de fermeture des problèmes semblables se posent. Aussi, avec les actionneurs connus à ce jour, notamment ceux à base de moteurs électriques, on prévoit un surdimensionnement de l'actionneur afin d'assurer l'ouverture de la vanne dans les conditions les moins favorables. Ce surdimensionnement entraîne une consommation d'énergie importante, un encombrement élevé et un coût supplémentaire. Il est souhaitable en outre que la commande permette d'assurer une position précise de l'organe d'obturation et puisse être proportionnelle.

L'invention a donc pour but, surtout, de proposer une vanne motorisée qui ne nécessite pas d'avoir à surdimensionner l'actionneur tout en permettant une ouverture et une fermeture de la vanne fiables et sans à-coups.

Selon l'invention telle que définie par les caractéristiques de la revendication 1, une vanne motorisée comportant un corps avec au moins une entrée et une sortie, un organe d'obturation monté mobile dans le corps pour obturer ou libérer un passage entre l'entrée et la sortie, et un actionneur pour commander le déplacement de l'organe d'obturation, l'organe d'obturation étant un clapet propre à venir s'appliquer sur un siège, ledit clapet étant solidaire d'une tige mobile en translation entraînée par un moteur électrique, l'actionneur étant un moteur électrique piloté et ladite vanne motorisée étant équipée d'un moyen de pilotage prévu pour commander le moteur électrique piloté avec une valeur réduite de la vitesse en début d'ouverture de l'organe d'obturation pour que le moteur puisse exercer un effort maximal, et pour augmenter la vitesse du moteur après le début d'ouverture, est caractérisé en ce que le moteur électrique piloté est un moteur pas à pas, le moyen de pilotage comporte une carte de pilotage électronique comportant un programme définissant au moins un cycle de pilotage de la vanne, le moyen de pilotage est disposé dans un logement solidaire du corps et en ce que la carte de pilotage comporte des moyens de sélection permettant, en fonction de la nature du fluide traversant la vanne, de choisir un cycle de pilotage parmi plusieurs cycles de pilotage préétablis.

La pression du fluide peut provenir de l'amont, et s'opposer à l'ouverture du clapet.

Le clapet peut être entraîné par l'intermédiaire d'un système vis-écrou.

La carte de pilotage électronique peut comporter une unité de comptage propre à compter les pas du moteur pas à pas.

De préférence, au moins un cycle de pilotage comprend, à la suite d'une première phase où la valeur de la vitesse du moteur électrique piloté est réduite, une deuxième phase de transition où la vitesse est croissante et une troisième phase où la valeur de la vitesse du moteur électrique piloté est maximisée.

Lesdits moyens de sélection peuvent comporter un boîtier d'interrupteurs permettant des combinaisons.

Avantageusement, une vanne motorisée selon l'invention comporte un moyen de réserve d'énergie permettant au moteur électrique piloté de ramener la vanne dans un état prédéfini lors d'une coupure de l'alimentation électrique. Le moyen de réserve d'énergie pourra être constitué, par exemple, par des condensateurs ou des batteries.

La vanne motorisée selon l'invention peut être combinée avec un circuit d'asservissement en boucle fermée, indépendant de la vanne motorisée, comportant une unité de comptage propre à compter les pas du moteur pas à pas, un capteur propre à donner une information sur l'état de la vanne, en particulier un capteur de pression / débit, et un comparateur. Le capteur permet de détecter la position de l'organe d'obturation et envoie une information sur l'organe d'obturation au moyen de pilotage, et le comparateur est propre à comparer ladite information sur l'organe d'obturation avec une valeur de consigne et à en déduire un écart de positionnement permettant ainsi au moyen de pilotage d'agir sur le pilotage du moteur électrique piloté en vue d'annuler cet écart de positionnement, de sorte que la vanne motorisée devient une vanne à débit proportionnel.

La vanne motorisée peut comporter un moyen d'affichage permettant de visualiser l'état d'ouverture ou de fermeture de la vanne et/ou la mise en oeuvre ou non du moyen de réserve d'énergie et/ou d'autres paramètres de fonctionnement.

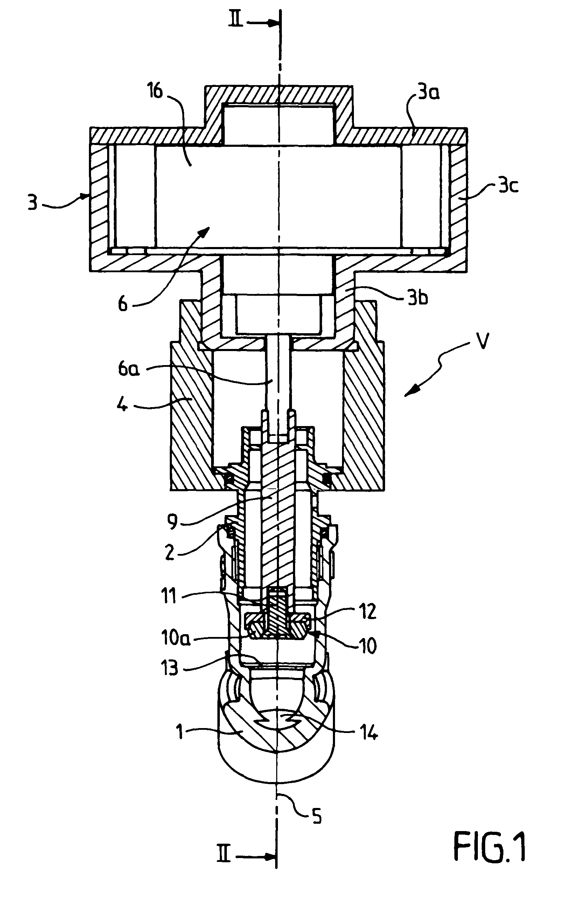

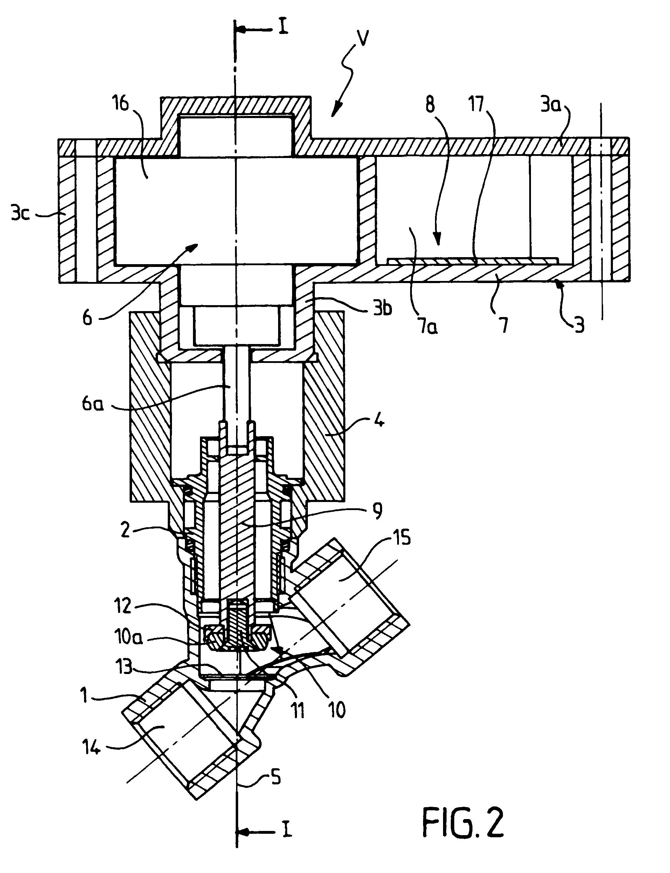

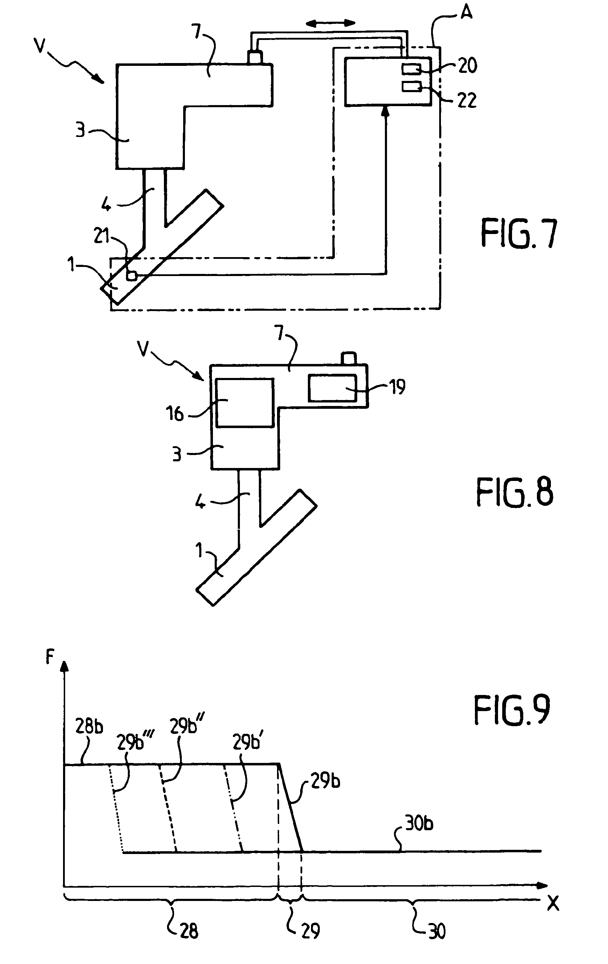

D'autres caractéristiques et avantages de l'invention apparaîtront dans la description qui suit avec référence aux dessins annexés mais qui n'a aucun caractère limitatif. Sur ces dessins :
Fig. 1 est une coupe selon la ligne I-I de Fig. 2 avec parties en extérieur d'un mode de réalisation d'une vanne motorisée selon l'invention.
Fig. 2 est une coupe selon la ligne II-II de Fig.1 avec parties en extérieur de la vanne motorisée.
Fig. 3 est une vue de dessus, couvercle enlevé, de la vanne motorisée de Fig 2 montrant une carte de pilotage, reliée au moteur, dans son logement.
Fig. 4 est une vue en perspective de la vanne motorisée.
Fig. 5 est un diagramme représentant schématiquement, pour une vanne motorisée selon l'invention, la vitesse du moteur électrique piloté, en ordonnée, en fonction de la position du clapet, en abscisse.
Fig. 6 est un diagramme représentant schématiquement, pour une vanne motorisée selon l'invention, l'effort d'ouverture communiqué au clapet par le moteur électrique piloté, en ordonnée, en fonction de la position du clapet, en abscisse.
Fig.7 représente schématiquement une vanne motorisée selon l'invention, le moyen de pilotage et un automate, dans le cas d'un fonctionnement avec débit proportionnel.
Fig. 8 représente schématiquement une vanne motorisée selon l'invention comportant un moyen de réserve d'énergie, et
Fig. 9 est un diagramme représentant schématiquement, pour une vanne motorisée selon l'invention, l'effort d'ouverture, communiqué au clapet par le moteur électrique piloté, en fonction de la position du clapet pour différentes formes de cycle de pilotage de la vanne.
En se référant aux Fig. 1 et 2, on peut voir que, selon un mode de réalisation préféré de l'invention, la vanne motorisée V comprend un corps 1 monté de manière solidaire d'un élément intermédiaire 2 au moyen d'un filetage. Un carter 3 est monté de manière fixe sur le corps 1 et l'élément intermédiaire 2 par l'intermédiaire d'une entretoise 4.
Le carter 3 comprend un couvercle 3a démontable et une partie inférieure 3b globalement de révolution autour d'un axe géométrique 5 de manière à pouvoir accueillir la partie inférieure d'un moteur électrique piloté 6. Une partie supérieure 3c du carter épouse la forme cylindrique et les pattes de fixation de la partie supérieure du moteur piloté 6. Le carter 3 comprend, de plus, une extension 7 s'étendant perpendiculairement à l'axe géométrique 5, comportant un logement 7a, pouvant recevoir un moyen de pilotage 8.
Le moteur électrique piloté 6 comprend avantageusement un système vis-écrou, non représenté, permettant de communiquer à l'arbre de sortie 6a du moteur, un mouvement de translation. Un arbre intermédiaire 9 est solidaire à son extrémité supérieure de l'arbre 6a. Un clapet 10a, jouant le rôle d' un organe d'obturation 10, est monté à l'extrémité inférieure de l'arbre intermédiaire 9, par exemple au moyen d'une vis 11, une rondelle support 12 étant interposée entre ledit arbre intermédiaire 9 et ledit clapet 10a.
Lors de la fermeture, le moteur électrique piloté 6 entraîne l'arbre intermédiaire 9 dans un mouvement de translation vers le bas et le clapet 10a, en fin de mouvement, vient en appui sur un siège 13, obstruant ainsi le passage entre une entrée 15 et une sortie 14.
Les mouvements du clapet 10a lors des opérations d'ouverture et de fermeture de la vanne motorisée V sont contrôlés par le moyen de pilotage 8.
Le moyen de pilotage 8 commande le moteur électrique piloté 6 de manière à assurer une valeur réduite de la vitesse du moteur en début d'ouverture du clapet 10a et une vitesse plus élevée après le début d'ouverture. En début d'ouverture, le moteur peut exercer un effort maximal sur le clapet 10a.
Le moteur électrique piloté 6 est un moteur pas à pas 16.
Le moyen de pilotage 8 comporte une carte de pilotage électronique 17 contenant un programme définissant plusieurs cycles de pilotage de la vanne. En fonction de la nature du fluide traversant la vanne et des conditions d'exploitation, comme par exemple la température de fonctionnement qui a une influence sur la viscosité du fluide, il est possible de choisir, parmi plusieurs formes de cycle de pilotage préétablies, celle qui convient le mieux. Ce type de disposition permet une grande souplesse d'utilisation. En outre il est possible de changer rapidement la carte de pilotage 17 pour tenir compte des nécessitées d'exploitation.

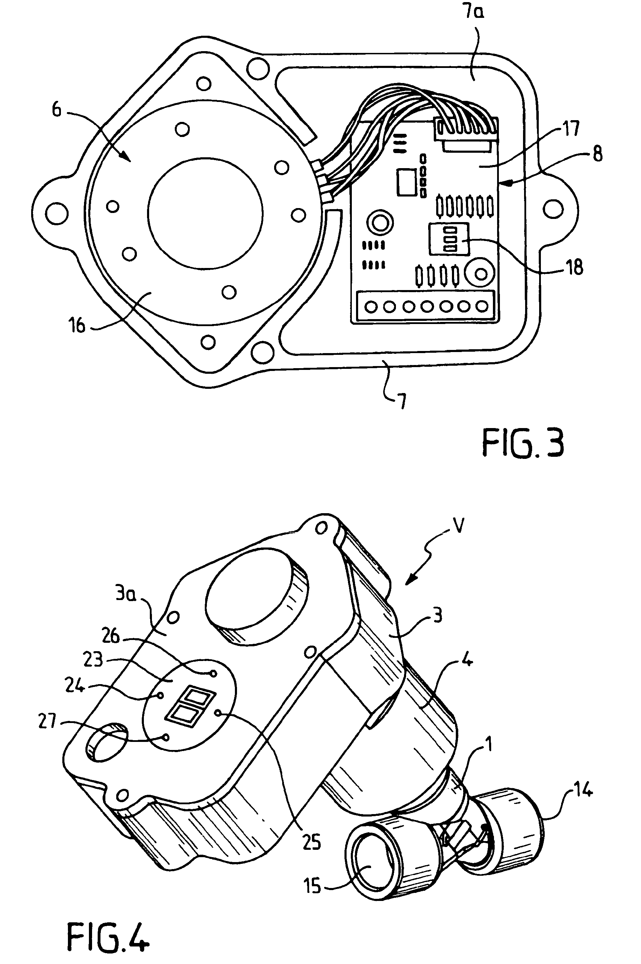

Fig. 3 montre des moyens de sélection 18 disposés sur la carte de pilotage électronique 17, qui permettent d'effectuer un choix. Les moyens de sélection 18 peuvent être constitués par un boîtier d'interrupteurs permettant des combinaisons. Trois interrupteurs, par exemple, permettent huit combinaisons et donc un choix entre huit formes de cycle de pilotage.
La carte de pilotage 17, comme illustré sur Fig. 7, est combinée avec un circuit d'asservissement à boucle fermée A comprenant une unité de comptage 20 propre à compter les pas du moteur pas à pas 16 ainsi qu'un capteur de pression / débit 21 permettant de détecter l'état du clapet 10a. Le capteur 21 envoie une information du clapet 10a à la carte de pilotage 17. Le circuit d'asservissement A comporte, de plus, un comparateur 22 propre à comparer ladite information de clapet avec une valeur de consigne, ce qui permet à la carte de pilotage 17 d'en déduire un écart de positionnement et d'agir sur le pilotage du moteur pas à pas 16 pour annuler cet écart de positionnement. On obtient alors un asservissement et la vanne motorisée V devient une vanne à débit proportionnel à boucle fermée.
Cet asservissement augmente de manière significative la précision de positionnement du clapet 10a. En variante, le capteur 21 pourrait être un capteur de position du clapet.
Un moyen d'affichage 23, illustré sur Fig. 4, situé sur le couvercle au-dessus du logement 7a contenant la carte de pilotage électronique 17, permet de visualiser l'état d'ouverture ou de fermeture de la vanne motorisée V. Par exemple, un premier voyant 24, clignotant lors de la phase de fermeture, est allumé en continu lorsque la vanne est totalement fermée. De manière similaire, un second voyant 25, clignotant lors de la phase d'ouverture, est allumé en continu lorsque la vanne est totalement ouverte. Un troisième voyant 26 indique que la vanne motorisée V est sous tension et un quatrième voyant 27 s'allume pour signifier que les condensateurs ou les batteries, utilisés comme moyen de réserve d'énergie 19, dont le fonctionnement sera expliqué plus loin, sont activés.

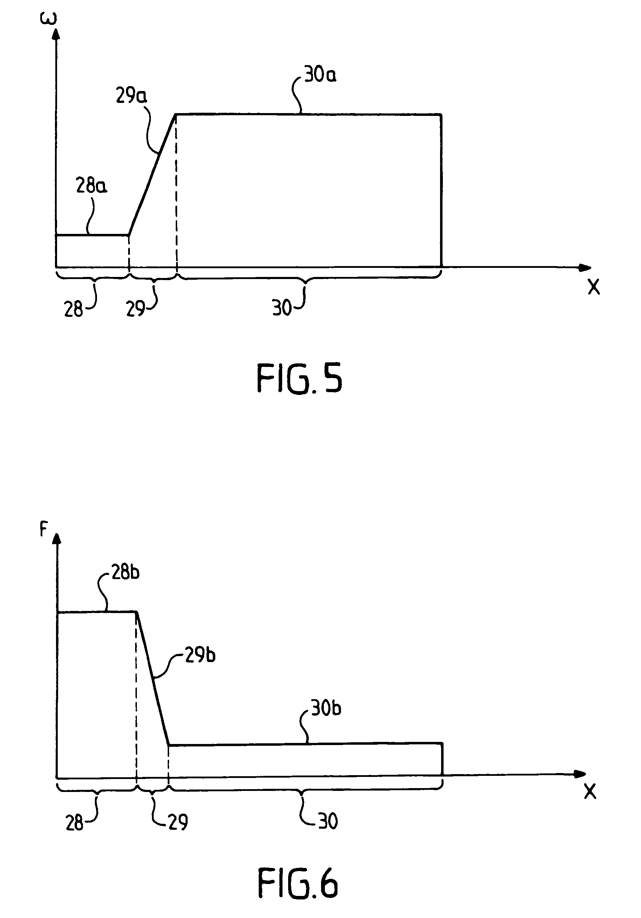

Fig. 5 représente schématiquement l'évolution de la valeur de la vitesse ω du moteur pas à pas 16 en fonction de la course X du clapet 10a pour un exemple de cycle de pilotage. On peut voir que ce cycle de pilotage comprend, à la suite d'une première phase 28 où la valeur 28a de la vitesse ω du moteur pas à pas 16 est réduite, une deuxième phase 29 de transition où la valeur 29a de ladite vitesse est croissante et une troisième phase 30 où la valeur 30a de ladite vitesse est maximisée.
Fig. 6 illustre schématiquement les valeurs de l'effort F transmis au clapet 10a par le moteur pas à pas 16, en fonction de la course X du clapet 10a, au cours du même cycle que celui de Fig. 5. Au cours de la première phase 28, la valeur 28b de l'effort F transmis au clapet 10a par le moteur pas à pas 16 est maximisée, pendant la deuxième phase 29 de transition la valeur 29b dudit effort est décroissante et pendant la troisième phase 30 la valeur 30b dudit effort est minimisée.
La durée des différentes phases 28, 29 et 30 peut être modulée, comme illustré schématiquement sur Fig. 9, en fonction notamment de la nature du fluide transitant dans la vanne motorisée V. Fig. 9 illustre schématiquement, pour quatre cycles différents avec des valeurs différentes de la longueur de la première phase 28, les valeurs de l'effort transmis au clapet 10a par le moteur pas à pas 16, en fonction de la course du clapet 10a. De manière similaire, il est possible de faire varier les durées des autres phases ou même de modifier leur forme. En particulier on peut envisager une phase de transition 29b qui ne soit pas linéaire et qui ait une forme plus complexe. Eventuellement, il est possible de prévoir un nombre plus important de phases.
Le moteur pas à pas 16, qui ne nécessite qu'une faible énergie de commande, autorise, comme cela est illustré Fig. 8, l'utilisation de condensateurs ou de batteries servant de moyen de réserve d'énergie 19 et permettant au moteur pas à pas 16 de ramener la vanne dans un état prédéfini, par exemple de fermeture, lors d'une coupure de l'alimentation électrique.
L'utilisation du moteur pas à pas 16 et d'une carte de pilotage 17 est mise à profit pour maîtriser le mouvement du clapet 10a avec une précision importante comme illustré Fig. 7.
Il est aussi possible de faire varier la tension de pilotage du moteur pas à pas pour modifier l'effort et/ou de faire varier la fréquence des impulsions alimentant le moteur pour modifier la vitesse de déplacement du clapet 10a. Cette maîtrise permet d'éviter à-coups et/ou coups de bélier.
Cette souplesse d'utilisation a d'importantes conséquences. En particulier, il est possible de sous-dimensionner le moteur pas à pas 16. En effet, c'est en début d'ouverture, dans un laps de temps assez court, que le moteur devra fournir l'effort F maximal et donc devra supporter la tension de pilotage la plus élevée. Donc il est possible, au cours de ce faible laps de temps, pour obtenir l'effort nécessaire, d'alimenter le moteur pas à pas 16 avec une tension de pilotage supérieure à la tension nominale du moteur. On obtient ainsi un gain de place en plus d'une réduction de la consommation d'énergie.

Le fonctionnement d'une vanne motorisée selon l'invention s'effectue comme suit, en se référant à Fig. 2, Fig. 5 et Fig. 6.

On rappelle qu'un moteur électrique pas à pas est commandé par des impulsions électriques. Chaque impulsion provoque un pas du moteur. La hauteur d'une impulsion dépend de la tension et la largeur de l'impulsion correspond à la durée.

En début d'ouverture, selon la première phase 28 du cycle de commande, la carte de pilotage électronique 17 commande le moteur pas à pas 16 avec
- une tension importante, de manière à obtenir un effort F important suivant la partie 28b de Fig. 6, et
- une fréquence des impulsions faible, de manière à obtenir une vitesse de rotation du moteur ω faible suivant la partie 28a de Fig. 5 et donc une vitesse de translation du clapet 10a faible.

L'ouverture peut s'effectuer contre la pression du fluide avec l'effort F plus important. Le moteur pas à pas 16 entraîne en translation le clapet 10b qui s'éloigne du siège 13.

L'ouverture partielle du clapet 10b permet au fluide de commencer à circuler entre l'entrée 15 et la sortie 14. Ceci entraîne une baisse du différentiel de pressions entre l'entrée 15 et la sortie 14. L'effort F nécessaire pour la poursuite de la course du clapet 10a devient donc moins important.

La carte de pilotage électronique 17 peut donc alors commander la deuxième phase 29 du cycle de commande. La tension de commande est diminuée de sorte que l'effort F diminue suivant la partie 29b de Fig. 6. Parallèlement, la fréquence des impulsions est augmentée afin d'augmenter la vitesse de rotation ω du moteur suivant la partie 29a de Fig. 5 et la vitesse de déplacement du clapet 10a

A la fin de la deuxième phase 29, ou phase de transition, on atteint la vitesse maximale du clapet 10a et l'effort F minimal.

La carte de pilotage électronique 17 agit pour stabiliser la fréquence des impulsions, de même que la tension de commande afin d'obtenir les parties 30a et 30b (Fig. 5 et Fig. 6) du cycle de commande.

Lors de la fermeture, la carte de pilotage électronique 17 peut assurer le même cycle en suivant les phases en sens inverse, commençant par la phase 30 et terminant par la phase 28 ou suivre un cycle de fermeture différent de celui de l'ouverture.

## Revendications

1. Vanne motorisée comportant un corps (1) avec au moins une entrée (15) et une sortie (14), un organe d'obturation (10) monté mobile dans le corps (1) pour obturer ou libérer un passage entre l'entrée (15) et la sortie (14), et un actionneur pour commander le déplacement de l'organe d'obturation (10), l'organe d'obturation étant un clapet (10a) propre à venir s'appliquer sur un siège (13), ledit clapet (10a) étant solidaire d'une tige mobile en translation entraînée par un moteur électrique, le moteur électrique étant un moteur électrique piloté (6) et ladite vanne motorisée étant équipée d'un moyen de pilotage (8) prévu pour commander le moteur électrique piloté (6) avec une valeur réduite de la vitesse du moteur en début d'ouverture de l'organe d'obturation (10) pour que le moteur puisse exercer un effort maximal, et pour augmenter la vitesse du moteur après le début d'ouverture, **caractérisée en ce que** le moteur électrique piloté (6) est un moteur pas à pas (16) et le moyen de pilotage (8) est disposé, au moins partiellement, dans un logement (7a) solidaire du corps de vanne et comporte une carte de pilotage électronique (17) comportant un programme définissant au moins un cycle de pilotage de la vanne et **en ce que** la carte de pilotage (17) comporte des moyens de sélection (18) permettant, en fonction de la nature du fluide traversant la vanne, de choisir une forme de cycle de pilotage parmi plusieurs formes de cycle de pilotage préétablies.

2. Vanne motorisée selon la revendication 1, **caractérisée en ce que** la pression du fluide provient de l'amont et s'oppose à l'ouverture du clapet (10a).

3. Vanne motorisée selon la revendication 1 ou 2, **caractérisée en ce que** le clapet (10a) est entraîné par l'intermédiaire d'un système vis-écrou.

4. Vanne motorisée selon la revendication 1, 2 ou 3, **caractérisée en ce qu'**elle est combinée avec un circuit d'asservissement en boucle fermée (A) indépendant de la vanne motorisée, comportant une unité de comptage (20) propre à compter les pas du moteur pas à pas, un capteur (21) propre à donner une information sur l'état de la vanne, en particulier un capteur de pression / débit, et un comparateur (22).

5. Vanne motorisée selon l'une quelconque des revendications précédentes, **caractérisée en ce que** au moins un cycle de pilotage comprend, à la suite d'une première phase (28) où la valeur de la vitesse du moteur électrique piloté (6) est réduite, une deuxième phase (29) de transition où ladite vitesse est croissante et une troisième phase (30) où la valeur de ladite vitesse est maximisée.

6. Vanne motorisée selon la revendication 1, **caractérisée en ce que** lesdits moyens de sélection (18) comportent un boîtier d'interrupteurs permettant des combinaisons.

7. Vanne motorisée selon l'une quelconque des revendications précédentes, **caractérisée en ce qu'**elle comporte un moyen de réserve d'énergie (19) permettant au moteur électrique piloté (6) de ramener la vanne dans un état prédéfini lors d'une coupure de l'alimentation électrique.

8. Vanne motorisée selon la revendication 7, **caractérisée en ce que** le moyen de réserve d'énergie (19) est un ensemble d'un ou plusieurs condensateurs.

9. Vanne motorisée selon la revendication 7, **caractérisée en ce que** le moyen de réserve d'énergie (19) est un ensemble d'une ou plusieurs batteries.

10. Vanne motorisée selon la revendication 4, **caractérisée en ce que** le capteur (21) permet de détecter la position de l'organe d'obturation (10) et envoie une information sur l'organe d'obturation au moyen de pilotage (8), et le comparateur (22) est propre à comparer ladite information sur l'organe d'obturation avec une valeur de consigne et à en déduire un écart de positionnement permettant ainsi au moyen de pilotage (8) d'agir sur le pilotage du moteur électrique piloté (6) en vue d'annuler cet écart de positionnement.

11. Vanne motorisée selon l'une quelconque des revendications précédentes, **caractérisée en ce qu'**elle comporte un moyen d'affichage (23) permettant de visualiser l'état d'ouverture ou de fermeture de la vanne et/ou la mise en oeuvre ou non du moyen de réserve d'énergie (19) et/ou d'autres paramètres de fonctionnement.

## Claims

1. Motorised valve comprising a body (1) with at least one inlet (15) and one outlet (14), an obturation member (10) mounted so as to be able to move in the body (1) in order to close off or leave clear a passage between the inlet (15) and the outlet (14), and an actuator for controlling the movement of the obturation member (10), the obturation member being a shutter (10a) able to come to be applied against a seat (13), the said shutter (10a) being secured to a translationally movable rod driven by an electric motor, the electric motor being a controlled motor (6) and the said motorised valve being equipped with a control means (8) designed to control the controlled electric motor (6) with a reduced speed of the motor at the start of opening of the obturation member (10) so that the motor can exert a maximum force, and to increase the speed of the motor after the start of opening, **characterised in that** the controlled electric motor (6) is a stepping motor (16) and the control means (8) is disposed at least partially in a housing (7a) secured to the valve body and comprises an electronic control card (17) comprising a program defining at least one control cycle for the valve, and **in that** the control card (17) comprises selection means (18) making it possible, according to the nature of the fluid passing through the valve, to choose a form of control cycle from several preestablished forms of control cycle.

2. Motorised valve according to claim 1, **characterised in that** the pressure of the fluid comes from upstream and opposes the opening of the shutter (10a).

3. Motorised valve according to claim 1 or 2, **characterised in that** the shutter (10a) is driven by means of a screw and nut system.

4. Motorised valve according to claim 1, 2 or 3, **characterised in that** it is combined with a closed loop feedback circuit (A) independent of the motorised valve, comprising a counting unit (20) able to count the steps of the stepping motor, a sensor (21) able to give information on the state of the valve, in particular a pressure/flow rate sensor, and a comparator (22).

5. Motorised valve according to any one of the preceding claims, **characterised in that** at least one control cycle comprises, following a first phase (28) where the speed of the controlled electric motor (6) is reduced, a second transition phase (29) where the said speed is increasing and a third phase (30) where the said speed is maximised.

6. Motorised valve according to claim 1, **characterised in that** the said selection means (18) comprise a switch box allowing combinations.

7. Motorised valve according to any one of the preceding claims, **characterised in that** it comprises an energy reserve means (19) enabling the controlled electric motor (6) to return the valve to a predefined state when the electrical supply is cut off.

8. Motorised valve according to claim 7, **characterised in that** the energy reserve means (19) is a set of one or more capacitors.

9. Motorised valve according to claim 7, **characterised in that** the energy reserve means (19) is a set of one or more batteries.

10. Motorised valve according to claim 4, **characterised in that** the sensor (21) makes it possible to detect the position of the obturation member (10) and sends information on the obturation member to the control means (8), and the comparator (22) is able to compare the said information on the obturation member with a set value and to deduce therefrom a positioning difference thus enabling the control means (8) to act on the control of the controlled electric motor (6) with a view to cancelling out this positioning difference.

11. Motorised valve according to any one of the previous claims, **characterised in that** it comprises a display means (23) for displaying the state of opening or closing of the valve and/or the use or not of the energy reserve means (9) and/or other operating parameters.

## Patentansprüche

1. Motorgesteuertes Ventil mit einem Körper (1), der mindestens einen Einlass (15) und einen Auslass (14) aufweist, einem bewegbar in dem Körper (1) angebrachten Schließelement (10) zum Sperren oder Freigeben eines Durchlasses zwischen dem Einlass (15) und dem Auslass (14), und einem Stellglied zum Steuern der Verschiebung des Schließelements (10), wobei das Schließelement eine Ventilklappe (10a) ist, welche zum Aufliegen auf einem Sitz (13) ausgebildet ist, wobei die Ventilklappe (10a) fest mit einer von einem Elektromotor angetriebenen hin und her bewegbaren Stange verbunden ist, wobei der Elektromotor ein gesteuerter Elektromotor (6) ist und das motorgesteuerte Ventil mit einer Steuereinrichtung (8) versehen ist, welche derart ausgebildet ist, dass sie den gesteuerten Elektromotor (6) zu Beginn des Öffnens des Schließelements (10) mit einem geringeren Motordrehzahlwert steuert, so dass der Motor eine maximale Kraft aufbringen kann, und dass sie die Motordrehzahl nach dem Beginn des Öffnens erhöht, **dadurch gekennzeichnet, dass** der gesteuerte Elektromotor (6) ein Schrittmotor (16) ist und die Steuereinrichtung (8) zumindest teilweise in einer Aufnahme (7a) angeordnet ist, welche fest mit dem Ventilkörper verbunden ist und eine elektronische Steuerkarte (17) aufweist, welche ein Programm enthält, das mindestens einen Steuerzyklus des Ventils definiert, und dass die Steuerkarte (17) Wähleinrichtungen (18) aufweist, die es ermöglichen, in Abhängigkeit von der Art des durch das Ventil strömenden Fluids, unter mehreren vorab erstellten Steuerzyklen eine Form eines Steuerzyklus zu wählen.

2. Motorgesteuertes Ventil nach Anspruch 1, **dadurch gekennzeichnet, dass** der Fluiddruck von stromaufwärts kommt und dem Öffnen der Ventilklappe (10a) entgegenwirkt.

3. Motorgesteuertes Ventil nach Anspruch 1 oder 2, **dadurch gekennzeichnet, dass** die Ventilklappe (10a) über ein Spindelmuttersystem angetrieben ist.

4. Motorgesteuertes Ventil nach Anspruch 1, 2 oder 3, **dadurch gekennzeichnet, dass** es mit einem von dem motorgesteuerten Ventil unabhängigen geschlossenen Servokreislauf (A) kombiniert ist, der eine Zähleinheit (20), welche zum Zählen der Schritte des Schrittmotors ausgebildet ist, einen Sensor (21), welcher zum Ausgeben einer Information über den Zustand des Ventils ausgebildet ist, insbesondere einen Druck-/Mengensensor, und einen Komparator (22) aufweist.

5. Motorgesteuertes Ventil nach einem der vorhergehenden Ansprüche, **dadurch gekennzeichnet, dass** mindestens ein Steuerzyklus im Anschluss an eine erste Phase, in welcher der Drehzahlwert des Elektromotors (6) gering ist, eine zweite Übergangsphase (29), in welcher die Drehzahl zunimmt, und eine dritte Phase (30) aufweist, in welcher der Drehzahlwert maximiert ist.

6. Motorgesteuertes Ventil nach Anspruch 1, **dadurch gekennzeichnet, dass** die Wähleinrichtungen (18) ein Schaltergehäuse aufweisen, das Kombinationen ermöglicht.

7. Motorgesteuertes Ventil nach einem der vorhergehenden Ansprüche, **dadurch gekennzeichnet, dass** es eine Energiereserveeinrichtung (19) aufweist, die es dem gesteuerten Elektromotor (6) ermöglicht, das Ventil bei einer Unterbrechung der Stromversorgung in einen vordefinierten Zustand zurückzuführen.

8. Motorgesteuertes Ventil nach Anspruch 7, **dadurch gekennzeichnet, dass** die Energiereserveeinrichtung (19) eine Anordnung aus einem oder mehreren Kondensatoren ist.

9. Motorgesteuertes Ventil nach Anspruch 7, **dadurch gekennzeichnet, dass** die Energiereserveeinrichtung (19) eine Anordnung aus einer oder mehreren Batterien ist.

10. Motorgesteuertes Ventil nach Anspruch 4, **dadurch gekennzeichnet, dass** der Sensor (21) das Erkennen der Position des Schließelements (10) ermöglicht und eine Information über das Schließelement an die Steuereinrichtung (8) sendet, und der Komparator (22) zum Vergleichen der Information über das Schließelement mit einem Sollwert und zum Ableiten einer Positionsabweichung ausgebildet ist, wodurch es der Steuereinrichtung (8) ermöglicht ist, auf die Steuerung des gesteuerten Elektromotors (6) einzuwirken, um die Positionsabweichung zu eliminieren.

11. Motorgesteuertes Ventil nach einem der vorhergehenden Ansprüche, **dadurch gekennzeichnet, dass** es eine Anzeigeeinrichtung (23) aufweist, welche eine Visualisierung des Öffnungs- oder Schließzustandes des Ventils und/oder der Betätigung oder der Nicht-Betätigung der Energiereserveeinrichtung (19) und/oder anderer Betriebsparameter ermöglicht.
